# EUROPÄISCHE PATENTSCHRIFT

(11) **EP 1 382 496 B1**
(45) Veröffentlichungstag und Bekanntmachung des Hinweises auf die Patenterteilung: **07.09.2005**
(21) Anmeldenummer: 03015570.9
(22) Anmeldetag: 11.07.2003
(51) Int. Cl.: B60R 21/26

(54) **Transportbaugruppe**
Transport assembly
Ensemble de transport

(30) Priorität: 19.07.2002 DE 20210948 U
(43) Veröffentlichungstag der Anmeldung: 21.01.2004
(73) Patentinhaber: TRW Airbag Systems GmbH, 84544 Aschau am Inn (DE)
(72) Erfinder: Henning, Nils, 18239 Satow (DE); Seddig, Monika, 18299 Laage (DE); Holzapfel, Jens, 18258 Klein Grenz (DE); Engler, Henri, 18146 Rostock (DE)
(74) Vertreter: Kitzhofer, Thomas

(56) Entgegenhaltungen:
- DE-A- 10 020 796
- US-A- 3 889 703
- US-A- 5 472 229
- US-A- 5 879 345

## Beschreibung

Die Erfindung betrifft eine Transportbaugruppe, mit einem ein Außengehäuse aufweisenden Gasgenerator, insbesondere für ein Fahrzeuginsassenrückhaltesystem, wobei das Außengehäuse wenigstens eine derart angeordnete Ausströmöffnung aufweist, daß beim Ausströmen von erzeugtem Gas eine Schubkraft auf das Außengehäuse ausgeübt wird, und mit einer entfembaren Transportabdeckung, die lösbar am Außengehäuse befestigt ist und sich um die Ausströmöffnung herum erstreckt, wobei Ausströmöffnungen in der Abdeckung so angeordnet sind, daß die Transportbaugruppe insgesamt bei Aktivierung des Gasgenerators schubneutral bleibt.

Es sind Gasgeneratoren zur Aktivierung von Fahrzeuginsassen-Schutzeinrichtungen bekannt, die nicht schubneutral ausgeführt sind. Der Gasgenerator hat z.B. an einem Ende eine axiale Ausströmöffnung, am anderen Ende hingegen nicht. Andere Ausführungsformen von nicht-schubneutralen Gasgeneratoren weisen am Umfang nur in bestimmten Teilbereichen vorgesehene Ausströmöffnungen auf und nicht über den Umfang gleichmäßig verteilte Ausströmöffnungen. Beim Transport dieser Gasgeneratoren, also vor deren Einbau, sollen diese nicht-schubneutralen Gasgeneratoren mit einer Art Sicherung versehen sein, die die Schubneutralität gewährleistet. Aus diesem Grund wird eine Transportabdeckung am Außengehäuse befestigt, die das Gas zwischen dem Außengehäuse und sich selbst in einer Art Verteilerkammer aufnimmt und über eigene Ausströmöffnungen gleichmäßig nach außen abgibt, so daß die geschlossene Baugruppe insgesamt schubneutral ist. Es wurde angedacht, solche Transportabdeckungen am Außengehäuse festzuschrauben und die Transportabdeckung vor dem Einbau des Gasgenerators wieder abzuschrauben.

In der DE 100 20 796 Al ist ein Endstück einer Gaslanze gezeigt, welches auf das Außengehäuse eines von Hause aus schubneutralen Gasgenerators aufgesteckt wird. Dieses Endstück ist jedoch ein den Gasgenerator und die Gaslanze verbindendes Teil und ist keine Transportabdeckung für die Ausströmseite des Gasgenerators. Ferner ist die Einheit aus Gasgenerator und Gaslanze nicht schubneutral.

Die US 5 879 345 zeigt eine auf ein Gefäß aufsteckbare, nur durch Zerstören vom Gefäß lösbare Versiegelungskappe, die eine Manipulation am Gefäß verhindert. Die Kappe gibt dem Gefäß keine Schubneutralität, denn sie ist aus Kunststoff, um sie von außen leicht zerstörbar zu machen, und würde entsprechend auch durch einen axialen Gasdruck eines Gasgenerators sofort zerstört werden.

Die Erfindung sieht vor, daß zwischen der Abdeckung und dem Außengehäuse eine Steckverbindung vorgesehen ist, die eine schnellere Montage und vor allem auch Demontage der Transportabdeckung erlaubt. Wichtig ist, daß die Abdeckkappe so auf den Gasgenerator abgestimmt ist, daß sie in montiertem Zustand nicht durch den versehentlich ausgelösten Gasgenerator zerstört wird und die Schubneutralität sicherstellt.

Vorzugsweise ist die Steckverbindung zerstörungsfrei von dem Außengehäuse lösbar, so daß die Transportabdeckung wiederverwendbar ist. Somit können auch hochwertigere Materialien für die Transportabdeckung verwendet werden.

Die Transportabdeckung ist gemäß der bevorzugten Ausführungsform mit wenigstens einem Vorsprung versehen, der in eine Ausnehmung in dem Außengehäuse rastet. Es wäre zwar möglich, diesen Vorsprung selbst elastisch auszuführen, gemäß der bevorzugten Ausführungsform ist jedoch der Vorsprung an einem federelastischen Abschnitt der Transportabdeckung vorgesehen, was insgesamt höhere Auslenkwege ermöglicht.

Ferner ist vorgesehen, daß die Transportabdeckung durch axiales Aufschieben auf das Außengehäuse befestig- und verrastbar ist, was ein sehr schnelles Montieren erlaubt.

Umgekehrt sollte zur schnellen Demontage die Steckverbindung so ausgeführt sein, daß durch axiales Abziehen der Transportabdeckung diese vom Außengehäuse demontierbar ist.

Wenn die Transportabdeckung wenigstens einen durch Längsschlitze erzeugten elastischen Finger hat, der in eine Ausnehmung im Außengehäuse eingreift, läßt sich die Steckverbindung vorzugsweise ohne Zusatzbauteile an der Transportabdeckung verwirklichen.

Vorzugsweise weist die Transportabdeckung sogar mehrere benachbarte elastische Finger auf oder sogar an einem Ende auf ihrem gesamten Umfang verteilt ausschließlich benachbarte elastische Finger, so daß sich die Transportabdeckung beim Aufschieben auf das Außengehäuse insgesamt aufweitet, um schließlich bei erreichter Ausnehmung oder Vertiefung in diese einzurasten.

Die Längsschlitze zur Erzeugung des oder der elastischen Finger gehen bevorzugt in die Ausströmöffnungen über. Die Ausströmöffnungen haben damit eine Doppelfunktion, indem sie auch als mechanische Entlastungsbohrungen am Ende der Längsschlitze dienen. Beim Aufweiten der Finger werden damit die Spannungen in der Wand der Ausströmöffnungen gleichmäßig verteilt, was die Belastungsspitzen verringert.

Vorzugsweise ist die Transportbaugruppe zusätzlich mit einem separaten Sicherungsteil versehen, das an der Transportabdeckung befestigbar ist und in montiertem Zustand ein Lösen des Sicherungsteils vom Außengehäuse verhindert. Dieses zusätzliche Sicherungsteil soll eine weitere mechanische Sicherung bilden.

Das Sicherungsteil kann beispielsweise ein Sicherungsring sein, der z.B. auf die Transportabdeckung aufschiebbar und wieder von ihr abziehbar ist.

Das Sicherungsteil kann ferner innenseitig wenigstens abschnittsweise konisch ausgeführt sein, was ein Abziehen von der Transportabdeckung erschwert und gegebenenfalls durch eine Art Keilwirkung einen zusätzlichen Reibschluß erzeugt.

Die Erfindung sieht vor, daß die Transportabdeckung eine Kappe sein kann, die auf ein Ende des Gasgenerators, insbesondere auf ein axiales Ende desselben, aufschiebbar ist. Zwischen der Kappe und dem Außengehäuse ergibt sich ein Gasverteilraum, über den das Gas schließlich zu den gleichmäßig am Umfang der Kappe verteilten Ausströmöffnungen strömen kann.

Der Gasgenerator hat gemäß einer bevorzugten Ausführungsform eine axiale Austrittsöffnung, wogegen die Transportabdeckung umfangsmäßig gleichmäßig verteilte Ausströmöffnungen besitzt. Die Gasströmung, die axial aus dem Gasgenerator austritt, wird also umgelenkt um dann radial gleichmäßig verteilt aus der Transportbaugruppe auszuströmen.

Die Steckverbindung ist bevorzugt eine axiale Rastverbindung, sie kann jedoch auch ein Bajonettverschluß sein, bei dem zusätzlich zur Montage eine Relativdrehung zwischen der Transportabdeckung und dem Außengehäuse notwendig ist.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 eine Seitenansicht einer erfindungsgemäßen Transportbaugruppe,
- Figur 2 eine Längsschnittansicht durch die in Figur 1 gezeigte Transportabdeckung und
- Figur 3 eine Schnittansicht durch den ebenfalls in Figur 1 gezeigten Sicherungsring.

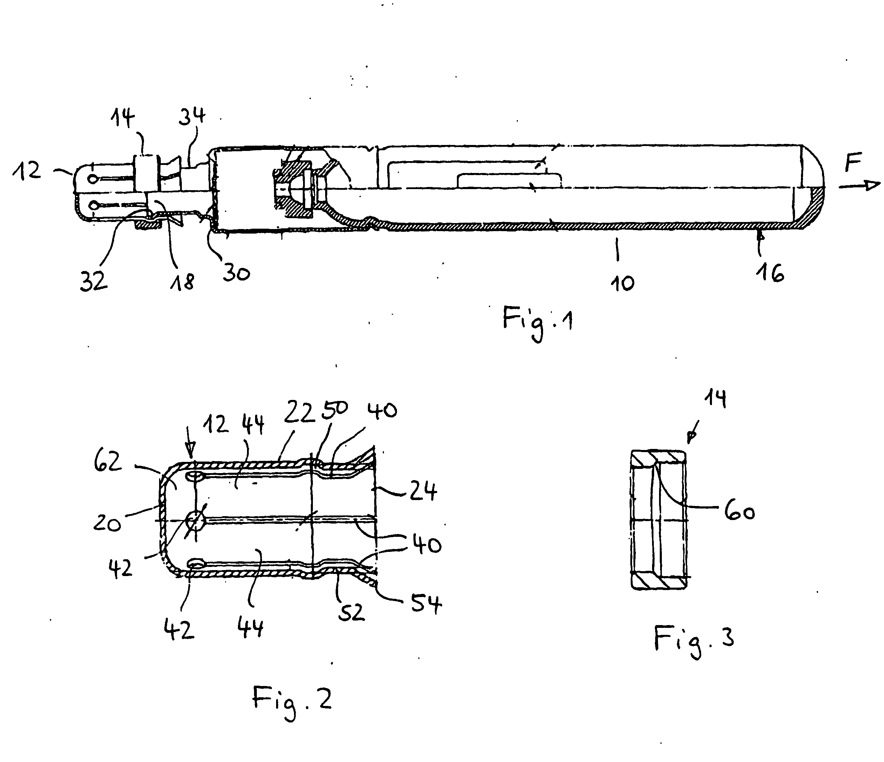

In Figur 1 ist eine Transportbaugruppe, bestehend aus einem Gasgenerator 10, einer kappenförmigen Transportabdeckung 12 und einem Sicherungsteil in Form eines Sicherungsrings 14, dargestellt. Der Gasgenerator 10 hat ein aus mehreren Teilen bestehendes Außengehäuse 16 und ist als langgestreckter Rohrgasgenerator ausgeführt. An einem axialen Ende ist das Außengehäuse 16 mit einer axialen Ausströmöffnung 18 versehen, über die das bei Aktivierung des Gasgenerators freigesetzte Gas aus dem Außengehäuse 16 austritt.

Da die Ausströmöffnung 18 die einzige Gasaustrittsöffnung ist, wird beim Aktivieren, im eingebauten Zustand des Gasgenerators 10, ein Schub erzeugt. Die erzeugte Schubkraft führt dazu, daß auf das Außengehäuse 16 eine Kraft in Richtung des Pfeiles F ausgeübt wird. Der Gasgenerator ist, mit anderen Worten, also nicht schubneutral ausgeführt.

Im Transportzustand des Gasgenerators oder beim Lagern desselben, bevor er verbaut wird, ist jedoch auf das axiale Ende mit der Ausströmöffnung 18 die Transportabdeckung 12 aufgesteckt, die in Figur 2 dargestellt ist.

Die Transportabdeckung 12 aus Metall ist topf- oder kappenförmig ausgeführt mit einem geschlossenen Boden 20 und einer sich daran anschließenden Umfangswand 22. Mit 24 ist das offene Ende der Transportabdeckung 12 bezeichnet, mit dem voraus sie auf das axiale Ende des Außengehäuses 16 aufgesteckt ist.

Die Verbindung zwischen dem Außengehäuse 16 und der Transportabdeckung 12 ist als Steckverbindung ausgeführt.

Diese Steckverbindung wird im folgenden näher beschrieben. Das Außengehäuse 16 weist im Bereich der Ausströmöffnung 18 ein umgeformtes Rohr 30 auf, das, bezogen auf das dargestellte linke Ende, zuerst eine Aufweitung 32 besitzt, an die sich in axialer Richtung eine Vertiefung oder Ausnehmung 34, ähnlich einer umfangsmäßig geschlossenen Nut anschließt.

Die Transportabdeckung 12 hat, vom offenen Ende ausgehend, auf dem Umfang gleichmäßig verteilte, axial verlaufende Längsschlitze 40, die zum Boden 20 hin in radiale Ausströmöffnungen 42 münden. Die Ausströmöffnungen 42 sind gleich groß und gleichmäßig über den Umfang verteilt.

Zwischen den Längsschlitzen 40 ergeben sich federelastische Abschnitte, auch als elastische Finger 44 bezeichnet, welche Segmente der Umfangswand 22 darstellen.

Vom Boden 22 ausgehend hat die Umfangswand 22 zuerst einen zylindrischen Abschnitt, anschließend eine ringförmige, nach außen gerichtete Wölbung 50, an die sich ein ringförmiger Vorsprung 52 und schließlich ein sich trichterförmig erweiterndes Ende 54 anschließen.

Der Sicherungsring 14 ist ein umfangsmäßig geschlossener Ring, vorzugsweise aus Stahl, mit einer Innenseite, die einen kurzen konischen Absatz 60 besitzt.

Nach der Herstellung des Gasgenerators wird zu dessen Lagerung und Transport durch ausschließlich axiales Aufschieben die Transportabdeckung 12 am Außengehäuse im Bereich des Rohres 30 befestigt. Beim Aufschieben federn die Finger 44 radial nach außen. Sobald die Aufweitung 32 in die Wölbung 50 rastet und gleichzeitig der Vorsprung 52 in die Ausnehmung 34 einfedern kann, werden sich die elastischen Finger 44 wieder radial einwärts bewegen, so daß eine Rastverbindung gewährleistet ist (siehe Figur 1).

Die Rastverbindung könnte natürlich auch mit widerhakenförmigen, selbstsichernden Vorsprüngen und hinterschnittenen Nuten ausgeführt sein, so daß kein separates Sicherungsteil wie der Sicherungsring 14 mehr vorhanden sein müßte. Eine solche Ausführung würde jedoch zum Entfernen der Transportabdeckung 12 eines größeren Aufwandes bedürfen. Solche Rastverbindungen sind zum Teil auch nur mit Spezialwerkzeug oder unter Zerstörung lösbar.

Im gezeigten Ausführungsbeispiel hingegen ist die Transportabdeckung 12 beliebig oft wiederverwendbar und sehr schnell bei geringem Aufwand von dem Außengehäuse 16 lösbar.

Dies wird durch den Sicherungsring 14 ermöglicht, der bei montierter Transportabdeckung 12 von außen über die Transportabdeckung 12 geschoben wird, bis der Absatz 60 gegen den wulstartigen Vorsprung drückt, der auf der Außenseite der Wölbung 50 gebildet ist (siehe Figur 1). Der Sicherungsring 14 wirkt wie ein Konus und stellt sicher, daß die Transportabdeckung 12 spielfrei und dicht auf dem Rohr 30 sitzt.

Alternativ wäre es natürlich auch möglich, eine weitere Rastverbindung zwischen dem Sicherungsring 14 und der Transportabdeckung 12 vorzusehen.

Zur Demontage wird der Sicherungsring 14 durch reines axiales Bewegen wieder von der Transportabdeckung 12 abgezogen, woraufhin diese wieder durch ausschließlich axiales Abziehen vom Außengehäuse 16 gelöst werden kann.

Sollte bei der Lagerung oder dem Transport der montierten Transportbaugruppe versehentlich der Gasgenerator 10 aktiviert werden, so strömt das Gas über die Ausströmöffnung 18 in das Innere der Transportabdeckung 12, welches einen Gasverteilraum 62 bildet. Über die Ausströmöffnungen 42 und auch die Längsschlitze 40 strömt das Gas schließlich radial nach außen, wobei die gesamte Transportbaugruppe, wie gesagt, dabei schubneutral ist.

## Patentansprüche

1. Transportbaugruppe, mit
einem ein Außengehäuse (16) aufweisenden Gasgenerator (10), wobei das Außengehäuse (16) wenigstens eine derart angeordnete Ausströmöffnung (18) aufweist, daß beim Ausströmen von erzeugtem Gas eine Schubkraft auf das Außengehäuse (16) ausgeübt wird, und
einer entfernbaren Transportabdeckung (12), die lösbar am Außengehäuse (16) befestigt ist und sich um die Ausströmöffnung (18) des Außengehäuses (16) herum erstreckt, wobei Ausströmöffnungen (42) in der Transportabdeckung (12) so angeordnet sind, daß die Transportbaugruppe insgesamt bei Aktivierung des Gasgenerators schubneutral bleibt,
wobei zwischen Transportabdeckung (12) und Außengehäuse (16) eine Steckverbindung vorgesehen ist.

2. Transportbaugruppe nach Anspruch 1, **dadurch gekennzeichnet, daß** die Steckverbindung zerstörungsfrei lösbar ist.

3. Transportbaugruppe nach Anspruch 1 oder 2, **dadurch gekennzeichnet, daß** die Transportabdeckung (12) mit wenigstens einem Vorsprung (52) in eine Ausnehmung (34) in dem Außengehäuse (16) einrastet.

4. Transportbaugruppe nach Anspruch 3, **dadurch gekennzeichnet, daß** die Transportabdeckung (12) einen federelastischen Abschnitt hat, an dem der Vorsprung (52) vorgesehen ist.

5. Transportbaugruppe nach einem der vorhergehenden Ansprüche, **dadurch gekennzeichnet, daß** die Transportabdeckung (12) durch axiales Aufschieben auf das Außengehäuse (16) befestigt und verrastbar ist.

6. Transportbaugruppe nach einem der vorhergehenden Ansprüche, **dadurch gekennzeichnet, daß** die Transportabdeckung (12) durch axiales Abziehen vom Außengehäuse (16) demontierbar ist.

7. Transportbaugruppe nach einem der vorhergehenden Ansprüche, **dadurch gekennzeichnet, daß** die Transportabdeckung (12) wenigstens einen durch Längsschlitze (40) erzeugten elastischen Finger hat, der in eine Ausnehmung (34) am Außengehäuse (16) eingreift.

8. Transportbaugruppe nach Anspruch 7, **dadurch gekennzeichnet, daß** die Transportabdeckung (12) mehrere benachbarte elastische Finger (44) hat.

9. Transportbaugruppe nach Anspruch 7 oder 8, **dadurch gekennzeichnet, daß** die Längsschlitze (40) an einem ihrer axialen Enden in die Ausströmöffnungen (42) in der Transportabdeckung (12) übergehen.

10. Transportbaugruppe nach einem der vorhergehenden Ansprüche, **gekennzeichnet durch** ein separates Sicherungsteil, das an der Transportabdeckung (12) befestigbar ist und im montierten Zustand ein Lösen der Transportabdeckung (12) vom Außengehäuse (16) verhindert.

11. Transportbaugruppe nach Anspruch 10, **dadurch gekennzeichnet, daß** das Sicherungsteil ein Sicherungsring (14) ist.

12. Transportbaugruppe nach Anspruch 11, **dadurch gekennzeichnet, daß** der Sicherungsring (14) auf die Transportabdeckung (12) aufschiebbar und von ihr wieder abziehbar ist.

13. Transportbaugruppe nach einem der Ansprüche 10 bis 12, **dadurch gekennzeichnet, daß** das Sicherungsteil innenseitig wenigstens abschnittsweise konisch ist.

14. Transportbaugruppe nach einem der vorhergehenden Ansprüche, **dadurch gekennzeichnet, daß** die Transportabdeckung (12) eine Kappe ist, die auf ein Ende des Gasgenerators (10) aufschiebbar ist.

15. Transportbaugruppe nach einem der vorhergehenden Ansprüche, **dadurch gekennzeichnet, daß** der Gasgenerator (10) eine axiale Ausströmöffnung (18) hat.

16. Transportbaugruppe nach einem der vorhergehenden Ansprüche, **dadurch gekennzeichnet, daß** die Transportabdeckung (12) umfangsmäßig gleichmäßig verteilte Ausströmöffnungen (42) hat.

17. Transportbaugruppe nach einem der vorhergehenden Ansprüche, **dadurch gekennzeichnet, daß** die Steckverbindung eine axiale Rastverbindung oder ein Bajonettverschluß ist.

## Claims

1. A transport assembly comprising
a gas generator (10) having an outer housing (16), the outer housing (16) having at least one outflow opening (18) arranged such that during the outflow of generated gas, a thrust force is exerted onto the outer housing (16), and
a removable transport cover (12), which is detachably fastened to the outer housing (16) and extends around the outflow opening (18) of the outer housing (16), outflow openings (42) being arranged in the transport cover (12) such that the transport assembly as a whole remains neutral with respect to thrust on activation of the gas generator,
a plug connection being provided between the transport cover (12) and the outer housing (16).

2. The transport assembly according to Claim 1, **characterized in that** the plug connection can be detached without being destroyed.

3. The transport assembly according to Claim 1 or 2, **characterized in that** the transport cover (12) engages by at least one projection (52) into a recess (34) in the outer housing (16).

4. The transport assembly according to Claim 3, **characterized in that** the transport cover (12) has an elastic section on which the projection (52) is provided.

5. The transport assembly according to any of the preceding claims, **characterized in that** the transport cover (12) is fastened by being axially pushed onto the outer housing (16) and is adapted to be locked in place.

6. The transport assembly according to any of the preceding claims, **characterized in that** the transport cover (12) is adapted to be dismounted by axial withdrawal from the outer housing (16).

7. The transport assembly according to any of the preceding claims, **characterized in that** the transport cover (12) has at least one elastic finger produced by longitudinal slots (40), which engages into a recess (34) on the outer housing (16).

8. The transport assembly according to Claim 7, **characterized in that** the transport cover (12) has several elastic fingers (44) adjacent to each other.

9. The transport assembly according to Claim 7 or 8, **characterized in that** the longitudinal slots (40) at one of their axial ends continue into the outflow openings (42) in the transport cover (12).

10. The transport assembly according to any of the preceding claims, **characterized by** a separate retaining piece which can be fastened to the transport cover (12) and in the installed state prevents a detachment of the transport cover (12) from the outer housing (16).

11. The transport assembly according to Claim 10, **characterized in that** the retaining piece is a retaining ring (14).

12. The transport assembly according to Claim 11, **characterized in that** the retaining ring (14) is adapted to be pushed onto and withdrawn again from the transport cover (12).

13. The transport assembly according to any of Claims 10 to 12, **characterized in that** the retaining piece is at least partially conical on the inside.

14. The transport assembly according to any of the preceding claims, **characterized in that** the transport cover (12) is a cap which can be pushed onto an end of the gas generator (10).

15. The transport assembly according to any of the preceding claims, **characterized in that** the gas generator (10) has an axial outflow opening (18).

16. The transport assembly according to any of the preceding claims, **characterized in that** the transport cover (12) has outflow openings (42) uniformly distributed over its periphery.

17. The transport assembly according to any of the preceding claims, **characterized in that** the plug connection is an axial detent connection or a bayonet closure.

## Revendications

1. Ensemble de transport comportant
un générateur de gaz (10) présentant un boîtier extérieur (16), le boîtier extérieur (16) présentant un orifice d'échappement (18) agencé de telle sorte que lorsque du gaz produit s'échappe, une force de poussée est exercée sur le boîtier extérieur (16), et
une chape de transport (12) amovible qui est fixée de manière détachable sur le boîtier extérieur (16) et qui s'étend autour de l'orifice d'échappement (18) du boîtier extérieur (16), des orifices d'échappement (42) étant agencés dans la chape de transport (12) de telle sorte que l'ensemble de transport reste dans l'ensemble neutre vis-à-vis de la poussée lorsque le générateur de gaz est activé,
une liaison par enfichage étant prévue entre la chape de transport (12) et le boîtier extérieur (16).

2. Ensemble de transport selon la revendication 1, **caractérisé en ce que** la liaison par enfichage peut être détachée sans être détruite.

3. Ensemble de transport selon la revendication 1 ou 2, **caractérisé en ce que** la chape de transport (12) s'enclenche avec au moins une saillie (52) dans un évidement (34) dans le boîtier extérieur (16).

4. Ensemble de transport selon la revendication 3, **caractérisé en ce que** la chape de transport (12) a un tronçon élastique à effet de ressort, sur lequel est prévue la saillie (52).

5. Ensemble de transport selon l'une des revendications précédentes, **caractérisé en ce que** la chape de transport (12) est fixée en étant enfilée axialement sur le boîtier extérieur (16) et peut s'enclencher.

6. Ensemble de transport selon l'une des revendications précédentes, **caractérisé en ce que** la chape de transport (12) peut être démontée en étant retirée axialement hors du boîtier extérieur (16).

7. Ensemble de transport selon l'une des revendications précédentes, **caractérisé en ce que** la chape de transport (12) a au moins un doigt élastique produit par des fentes longitudinales (40), lequel s'engage dans un évidement (34) sur le boîtier extérieur (16).

8. Ensemble de transport selon la revendication 7, **caractérisé en ce que** la chape de transport (12) a plusieurs doigts (44) élastiques voisins.

9. Ensemble de transport selon la revendication 7 ou 8, **caractérisé en ce qu'**à l'une de leurs extrémités axiales, les fentes longitudinales (40) se poursuivent dans les orifices d'échappement (42) dans la chape de transport (12).

10. Ensemble de transport selon l'une des revendications précédentes, **caractérisé par** une pièce de sécurité séparée qui peut être fixée sur la chape de transport (12) et qui, à l'état de montage, empêche que la chape de transport (12) se détache du boîtier extérieur (16).

11. Ensemble de transport selon la revendication 10, **caractérisé en ce que** la pièce de sécurité est une bague de sécurité (14).

12. Ensemble de transport selon la revendication 11, **caractérisé en ce que** la bague de sécurité (14) peut être enfilée sur la chape de transport (12) et de nouveau retirée de celle-ci.

13. Ensemble de transport selon l'une des revendications 10 à 12, **caractérisé en ce que** sur la face intérieure, la pièce de sécurité est au moins partiellement conique.

14. Ensemble de transport selon l'une des revendications précédentes, **caractérisé en ce que** la chape de transport (12) est un capuchon qui peut être enfilé sur une extrémité du générateur de gaz (10).

15. Ensemble de transport selon l'une des revendications précédentes, **caractérisé en ce que** le générateur de gaz (10) a un orifice d'échappement (18) axial.

16. Ensemble de transport selon l'une des revendications précédentes, **caractérisé en ce que** la chape de transport (12) a des orifices d'échappement répartis régulièrement sur la périphérie.

17. Ensemble de transport selon l'une des revendications précédentes, **caractérisé en ce que** la liaison par enfichage est une liaison par enclenchement axiale ou une fermeture à baïonnette.
